# EUROPÄISCHE PATENTANMELDUNG

(11) **EP 4 317 082 A1**
(43) Veröffentlichungstag der Anmeldung: **07.02.2024**
(21) Anmeldenummer: 23189253.0
(22) Anmeldetag: 02.08.2023
(51) Int. Cl.: C02F 1/28, C02F 1/00, B01J 20/10, B01J 20/14, B01J 20/16, B01J 20/20, B01J 20/28, B01D 37/02, B01D 39/00

(54) **VERFAHREN ZUR REINIGUNG VON ABWASSER MIT EINEM ANSCHWEMMFILTER**

(30) Priorität: 03.08.2022 DE 102022119484
(71) Anmelder: HOFFMANN Maschinen- und Apparatebau GmbH, 38268 Lengede (DE)
(72) Erfinder: Geers, Helmut, 38678 Clausthal-Zellerfeld (DE)
(74) Vertreter: Ahrens, Gabriele

(57) **Zusammenfassung**

Die Erfindung betrifft ein Verfahren zur Reinigung von Abwasser, insbesondere nachgeschaltet zu einer Kläranlage für das Abwasser, wobei das Abwasser mittels eines Anschwemmfilters (10) gereinigt wird, wobei der Anschwemmfilter (10) wenigstens eine Trägerschicht (12) und eine Filterschicht (14) aufweist, wobei die Filterschicht (14) ein Adsorptionsagens umfasst, wobei die Filterschicht (14) außerdem ein Drainagemittel umfasst, welches mit dem Adsorptionsagens vermischt ist, wobei das Adsorptionsagens eine mittlere Partikelgröße im Bereich von 10 bis 80 µm aufweist und wobei das Drainagemittel eine mittlere Partikelgröße im Bereich von 50 bis 100 µm aufweist.

## Beschreibung

Die Erfindung betrifft ein Verfahren zur Reinigung von Abwasser, insbesondere nachgeschaltet zu einer Kläranlage für das Abwasser, wobei das Abwasser mittels eines Anschwemmfilters gereinigt wird.

Ein Anschwemmfilter umfasst typischerweise eine Trägerschicht und eine Filterschicht, wobei die Trägerschicht beständig ist, beispielsweise ein Gewebe umfasst. Die Filterschicht ist typischerweise aus pulverförmigem Material aufgebaut, welches an die Trägerschicht angeschwemmt wurde. Zu diesem Zweck wird typischerweise das pulverförmige Material in eine Flüssigkeit, zumeist Wasser, gegeben und die Trägerschicht wird mit der Mischung aus Flüssigkeit und pulverförmigem Material durchströmt, sodass sich das Material an der Trägerschicht ablagert. Anschließen kann das abgelagerte bzw. angeschwemmte Material als Filter wirken.

Anschwemmfilter sind grundsätzlich bekannt und werden in verschiedenen Bereichen der Verfahrenstechnik verwendet. In der Abwasserreinigung sind Anschwemmfilter grundsätzlich bekannt. Hier wird typischerweise Aktivkohle als Filtermaterial eingesetzt, da Aktivkohle eine adsorbieren Wirkung für viele im Abwasser suspendierte und/oder gelöste Spurenstoffe aufweist.

So beschreibt DE 101 58 899 B4 ein Filterhilfsmittel und ein Verfahren für die Abwasserreinigung, wobei als Filterhilfsmittel eine Kombination aus 10 bis 90 Gewichtsteilen feinpulvriger Aktivkohle, 10 bis 90 Gewichtsteilen Holzmehl sowie, bezogen auf 100 Gewichtsteile der vorstehend genannten Komponenten, 0,5 bis 900 Gewichtsteile Diatomit und 0,5 bis 900 Gewichtsteile Asche und, gegebenenfalls, weitere Bestandteile wie Perlite, Klinoptilolit etc. verwendet wird. Das Mittel und das Verfahren werden insbesondere zur Aufreinigung von Abwasser von AOX (adsorbierbare organische Halogenverbindungen) in gelöster sowie suspendierter Form eingesetzt.

Besonders gute Resultate wurden gefunden, wenn etwa 75 Gew.% Aktivkohleteilchen kleiner als 90 µm und etwa 80 Gew.% der Holzmehlteilchen kleiner als 400 µm sind.

DE 103 52 460 A1 betrifft Filterhilfsmittel zur Adsorption von Trihalogenmethanen und AOX sowie Reduzierung von Chloraminen aus Wasser, insbesondere aus Schwimm- und Badebeckenwasser, aus Pulveraktivkohle und Gemischen von Pulveraktivkohle mit anderen Filterhilfsmittel oder anderen Adsorptionsmitteln wie Diathomeen (Kieselgur), Perlite, Zellstoff, Zeolithe usw. Es wird der Einsatz des Mittels und geeignete Korngrößenbereiche für das Mittel für verschiedene Filtertypen wie Sand-, Membran-, Mehrschicht- und Anschwemmfilter diskutiert. Beispielsweise wird für Anschwemmfilter für das Filterhilfsmittel, insbesondere Pulveraktivkohle, eine Korngrößenverteilung zwischen 4 und 300 µm und für Sand- und Mehrschichtfilter von 1 bis 100 µm als vorteilhaft beschrieben.

Wichtige Ziele bei der Behandlung von Abwasser mit Aktivkohle sind insbesondere die Entfernung gelöster Spurenstoffe, insbesondere von Medikamentenresten, generell von pharmazeutischen Produkten, von Reinigungs- und Körperpflegemitteln, von Pflanzenschutzmitteln und/oder von Industriechemikalien aus dem Abwasser. Eine derartige Entfernung von Spurenstoffen im Kontext der Abwasserreinigung wird auch als vierte Reinigungsstufe bezeichnet.

Eine vierte Reinigungsstufe bzw. eine Filtration von Abwasser mit Aktivkohle wird verschiedentlich in kleineren Projekten realisiert. Ein flächendeckender Einsatz ist noch nicht gegeben, da die Wirtschaftlichkeit der bekannten Verfahren noch eingeschränkt ist.

Während die Wirksamkeit von Adsorption durch Aktivkohle grundsätzlich relativ gut ist, ist die Wirtschaftlichkeit von den in der Praxis verwendeten Verfahren aus unterschiedlichen Gründen eingeschränkt. Beispielsweise ist es neben dem Einsatz eines Anschwemmfilters möglich, die Aktivkohle in ein Becken zu streuen und schlicht zu warten, bis ausreichend Spurenstoffe adsorbiert wurden. Gegebenenfalls kann im Becken gerührt werden. Anlagen mit großen Kontaktbecken und anschließender Abtrennung der Pulveraktivkohle über Sedimentation oder Filtration sind großtechnisch realisiert worden. Allerdings ist hierbei eine lange Kontaktzeit zwischen Aktivkohle und Abwasser nötig, sodass in der Praxis große Becken vorgehalten werden müssen. Durch Anschwemmfilter lässt sich das Verfahren grundsätzlich beschleunigen und mit kompakteren Gerätschaften ausführen, da letztlich das gesamte Abwasser durch den oder die Anschwemmfilter geführt wird und somit erzwungenermaßen Kontakt mit der Aktivkohle erhält.

Allerdings befinden sich im Abwasser auch vor der vierten Reinigungsstufe noch weitere Partikel, die den Anschwemmfilter schnell verstopfen können. So bildet sich häufig eine schwer zu durchströmende Deckschicht auf der Filterschicht. Um eine vernünftige Filtrationsgeschwindigkeit beizubehalten muss der Druck erhöht werden. Dies hat aber natürlich enge Grenzen, insbesondere weil die Trägerschicht typischerweise nur eine begrenzte Stabilität hat. Auch ist eine erhöhte Pumpleistung energietechnisch nicht erwünscht. Somit muss die Filterschicht häufig ausgetauscht werden. Dies schadet der Wirtschaftlichkeit gleich in zweierlei Hinsicht. Erstens ist der Verbrauch an Filtermaterial bzw. Aktivkohle durch den häufigen Austausch hoch und zweitens wird während des Austausches das Verfahren unterbrochen.

Es ist daher eine Aufgabe der Erfindung, bei der Abwasserreinigung mittels eines Anschwemmfilters, welche einen Adsorptionsagens, wie etwa Aktivkohle, aufweist, die Standzeit des Anschwemmfilters zu erhöhen.

Diese Aufgabe wird durch ein Verfahren gemäß Anspruch 1 gelöst. Bei diesem Verfahren umfasst die Filterschicht einen Adsorptionsagens, wobei die Filterschicht außerdem ein Drainagemittel umfasst, welches mit dem Adsorptionsagens vermischt ist, wobei das Adsorptionsagens eine mittlere Partikelgröße im Bereich von 10 bis 80 µm aufweist und wobei das Drainagemittel eine mittlere Partikelgröße im Bereich von 50 bis 100 µm aufweist.

Es hat sich gezeigt, dass durch die Zugabe von Drainagemittel zu dem Adsorptionsagens mit der angegebenen Partikelgröße die Bildung einer Deckschicht deutlich verlangsamt und die Durchströmbarkeit deutlich länger erhalten bleibt. Das Drainagemittel sorgt dafür, dass die Partikel des Abwassers in die Filterschicht eindringen können, sodass die Deckschichtbildung reduziert wird. Das Drainagemittel wirkt dabei wie eine Art Abstandshalter zwischen den Partikeln des Adsorptionsagens. Es ergibt sich somit eine besonders lange Standzeit des Anschwemmfilters, also eine besonders lange Zeit bis wieder eine Regeneration des Filtermaterials nötig ist. Hierdurch ist die Wirtschaftlichkeit des Verfahrens besonders vorteilhaft.

Das Adsorptionsagens kann bevorzugt Aktivkohle, Zeolithe und/oder ein organisches Polymer sein oder umfassen. Das Adsorptionsagens kann auch eine Mischung aus verschiedenen Stoffen aufweisen.

Es hat sich als besonders vorteilhaft erwiesen, wenn das Adsorptionsagens einen Gewichtsanteil im Bereich von 20 bis 50 %, insbesondere im Bereich von 25 bis 35 %, der Filterschicht ausmacht. Der Gewichtsanteil bezieht sich auf den (theoretischen) trockenen Zustand, das Abwasser spielt also bei den hierin angegebenen Gewichtanteilen keine Rolle.

Besonders vorteilhaft ist es außerdem, wenn das Adsorptionsagens eine mittlere Partikelgröße im Bereich von 25 bis 30 µm aufweist. Dies erlaubt neben einer vorteilhaften Standzeit auch eine gute Adsorptionswirkung.

Das Adsorptionsagens kann bevorzugter Weise zumindest im Wesentlichen eine maximale Partikelgröße von höchstens 200 µm, insbesondere höchstens 100 µm, aufweisen. Dies wirkt sich ebenfalls vorteilhaft auf Standzeit und Adsorptionswirkung aus.

Das Drainagemittel kann beispielsweise Cellulose, Rohcellulose, Holzmehl, Perlit und/oder Kieselgur sein oder umfassen. Das Drainagemittel kann auch eine Mischung aus verschiedenen Stoffen umfassen.

Es hat sich als vorteilhaft gezeigt, wenn das Drainagemittel einen Gewichtsanteil im Bereich von 50 bis 80 %, bevorzugt im Bereich von 65 bis 75 %, der Filterschicht ausmacht.

Gemäß einer vorteilhaften Ausführungsform weist das Drainagemittel eine mittlere Partikelgröße im Bereich von 60 bis 80 µm auf. Dies hat sich als besonders vorteilhaft für die Standzeit des Filters erwiesen.

Generell ist es vorteilhaft, wenn das Drainagemittel eine mittlere Partikelgröße aufweist, die größer ist als, insbesondere wenigstens 1,5 mal so groß ist wie, die mittlere Partikelgröße des Adsorptionsagens.

Die mittlere Partikelgröße des Drainagemittels kann bevorzugt um wenigstens 30 µm größer sein als die mittlere Partikelgröße des Adsorptionsagens.

Vorteilhaft ist es außerdem, wenn das Drainagemittel zumindest im Wesentlichen eine maximale Partikelgröße von höchstens 400 µm, bevorzugt höchstens 250 µm, aufweist.

Das Adsorptionsagens und/oder das Drainagemittel sind typischerweise pulverförmig. Zum Aufbauen der Filterschicht können das Adsorptionsagens und das Drainagemittel einem Zustrom des Anschwemmfilters beispielsweise gemeinsam beigegeben werden und/oder vor Beigabe vermischt werden.

Ein Aufbauen der Filterschicht erfolgt bevorzugt getrennt vom Abwasser, insbesondere unter Rein- oder Frischwasser. Auch die Nutzung von Filtrat aus vorangegangen Filterzyklen ist möglich.

Gemäß einer weiteren vorteilhaften Ausführungsform ist vorgesehen, dass im Betrieb des Anschwemmfilters ein Drainagemittel und/oder ein Adsorptionsagens dem Zustrom des Anschwemmfilters beigegeben werden. "Im Betrieb" heißt mit aufgebauter Filterschicht und/oder unter Durchströmung des Filters mit Abwasser. Diese Maßnahme kann auch als "body feed" bezeichnet werden. Durch die Maßnahme wird die Bildung einer schwer durchlässigen Deckschicht weiter eingeschränkt oder verzögert, sodass die Standzeit des Filters noch weiter verlängert werden kann.

Bei Abnahme der Reinigungsleistung, Aufbau einer Druckdifferenz am Filter oberhalb eines Schwellenwertes und/oder nach einer bestimmten Zeit erfolgt bevorzugt eine Erneuerung oder "Regeneration" des Filters umfassend Abbauen der Filterschicht und Aufbauen einer neuen Filterschicht.

Beim Abbauen der Filterschicht wird typischerweise die Pumpe, welche den Strom durch den Filter antreibt, abgeschaltet und die Partikel der Filterschicht können sich von der Trägerschicht lösen. Dies kann beispielsweise durch die Schwerkraft geschehen oder die Partikel der Filterschicht können aktiv abgespült werden. Nach Abbauen der Filterschicht werden die Partikel der alten Filterschicht typischerweise mittels eines weiteren Filters gesammelt und gesondert entsorgt. Nach Abbauen der Filterschicht kann eine neue Filterschicht aufgebaut werden, indem die Pumpe Wasser durch die Trägerschicht treibt und die Materialien für die Filterschicht dem Zustrom der Filterschicht zugegeben werden.

Die Trägerschicht und/oder die Filterschicht können sich bevorzugt vertikal erstrecken. Hierbei kann sich das Filtermaterial beim Abbauen des Filters leicht durch die Schwerkraft von der Trägerschicht lösen, grundsätzlich aber beispielsweise auch zusätzlich aktiv abgespült werden. Generell kann es vorteilhaft sein, wenn die Filterschicht horizontal durchströmt wird.

Es ist aber beispielsweise auch eine andere Ausrichtung der Trägerschicht und/oder der Filterschicht möglich, beispielsweise eine horizontale Ausrichtung.

Die Trägerschicht kann beispielsweise zumindest abschnittsweise oder zumindest überwiegend eben angeordnet sein. Beispielsweise kann die Trägerschicht kreis- oder tellerförmig ausgeführt sein. Die Trägerschicht kann beispielsweise auch austauschbar ausgeführt sein.

Generell können vorteilhafter Weise mehrere Anschwemmfilter eingesetzt werden.

Die Trägerschicht kann beispielsweise zylinderförmig, insbesondere kreiszylinderförmig, ausgeführt sein. Bei einer Trägerschicht mit vertikaler Zylinderform spricht man von einer "Filterkerze".

Das Verfahren kann insbesondere der Reinigung von Abwasser dienen, welches zuvor bereits eine Reinigung erhalten hat. Die Reinigung mittels Anschwemmfilter erfolgt also insbesondere als zusätzlicher Reinigungsschritt. Beispielsweise wird das Verfahren auf Abwasser aus dem Ablauf einer Kläranlage angewendet. Bei der Kläranlage kann es sich um eine kommunale Kläranlage handeln. Die Kläranlage kann eine erste, eine zweite und eine dritte Reinigungsstufe umfassen.

Das Verfahren kann bevorzugt als vierte Reinigungsstufe, insbesondere nachgeschaltet zu oder in einer Abwasserkläranlage bzw. in einem Abwasserklärverfahren durchgeführt werden.

Bei der Trägerschicht kann es sich bevorzugt um ein Gewebe, eine Membran oder ein Gitter handeln. Die Trägerschicht kann beispielsweise aus Kunststoff oder auch aus Metall hergestellt sein.

Es ist grundsätzlich möglich, dass der Anschwemmfilter eine angeschwemmte, zweite Trägerschicht zwischen der oben beschriebenen, ersten Trägerschicht und der Filterschicht aufweist. Die zweite Trägerschicht kann ein Drainagemittel umfassen, beispielsweise wie es oben beschrieben ist, oder aus einem solchen bestehen. Ein Aufbauen der zweiten Trägerschicht kann beispielsweise vor einem Aufbauen der Filterschicht erfolgen.

Abgesehen von einer etwaigen Vorreinigung kann das Abwasser beispielsweise aus der öffentlichen Kanalisation stammen und es kann sich grundsätzlich um Haushaltsabwasser und/oder Industrieabwasser handeln. Insbesondere für bestimmte Arten von Industrieabwässern kann das Verfahren beispielsweise auch ohne Vorreinigung angewendet werden. So können etwa pharmazeutische Wirkstoffe oder sonstige Chemikalien aus Abwässern entfernt werden, die ansonsten keine grobe Verschmutzung - für die der Anschwemmfilter womöglich nicht geeignet wäre - aufweisen.

Die Erfindung wird nachfolgend lediglich beispielhaft anhand der schematischen Zeichnung erläutert.

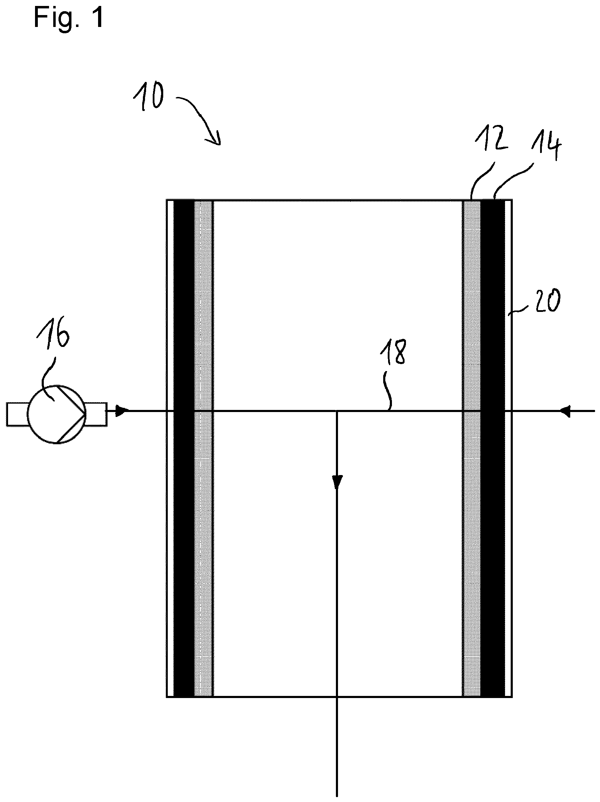

**Fig. 1** zeigt einen als Filterkerze ausgeführten Anschwemmfilter 10. Seine grundsätzlich zylindrische Form mit vertikaler Zylinderachse ist geschnitten gezeigt. Der Anschwemmfilter 10 umfasst eine Trägerschicht 12 und eine Filterschicht 14. Eine Pumpe 16 treibt einen Flüssigkeitsstrom 18 an, wie es durch Pfeile angedeutet ist. Der Flüssigkeitsstrom 18 wird im Betrieb zur Behandlung von Abwasser aufrechterhalten und sorgt außerdem beim Aufbauen der Filterschicht 14 - typischerweise mit Filtrat, Frisch- oder Reinwasser - für die Ansammlung von Filtermaterial stromaufwärts der Trägerschicht 12.

Die Filterschicht 14 kann gebildet werden, indem die Suspension mit Adsorptionsagens und Drainagemittel im Kreis über den Filter geführt wird, vorzugsweise bis die Suspension vollständig klar ist. Danach ist der Filterkuchen fest und es lösen sich im Betrieb keine Partikel aus der Schicht. Vorteilhafterweise wird die Filtration abgebrochen, bevor ein Filterdurchbruch eintritt, das heißt die Aufnahmekapazität der Filterschicht 14 erschöpft ist, und die Verunreinigungen wieder aus der Schicht austreten.

Die Pumpe 16 ist hier in einer Betriebsart gezeigt, die als Druckbetrieb bezeichnet wird. Grundsätzlich ist auch ein Saugbetreib möglich, d.h. die Pumpe kann auch nachgeschaltet zum Anschwemmfilter 10 vorgesehen sein. Der Druckbetrieb ist im Hinblick auf die erreichbaren Drücke vorteilhaft.

Es ist ferner eine Deckschicht 20 eingezeichnet, die sich im Betrieb aus Partikeln des Abwassers bildet und sich nachteilig auf die Durchströmbarkeit des Anschwemmfilters 10 auswirken kann. Durch die erfindungsgemäße Zusammensetzung der Filterschicht 14 wird die Bildung der Deckschicht 20 auf einfache und vorteilhafte Weise verzögert was die Standzeit des Anschwemmfilters 10 deutlich erhöht.

### Bezugszeichenliste

- 10: Anschwemmfilter
- 12: Trägerschicht
- 14: Filterschicht
- 16: Pumpe
- 18: Flüssigkeitsstrom
- 20: Deckschicht

## Patentansprüche

1. Verfahren zur Reinigung von Abwasser, insbesondere nachgeschaltet zu einer Kläranlage für das Abwasser,
**wobei** das Abwasser mittels eines Anschwemmfilters (10) gereinigt wird,
**wobei** der Anschwemmfilter (10) wenigstens eine Trägerschicht (12) und eine Filterschicht (14) aufweist,
**wobei** die Filterschicht (14) ein Adsorptionsagens umfasst,
**wobei** die Filterschicht (14) außerdem ein Drainagemittel umfasst, welches mit dem Adsorptionsagens vermischt ist,
**wobei** das Adsorptionsagens eine mittlere Partikelgröße im Bereich von 10 bis 80 µm aufweist und
**wobei** das Drainagemittel eine mittlere Partikelgröße im Bereich von 50 bis 100 µm aufweist.

2. Verfahren nach Anspruch 1,
**wobei** das Adsorptionsagens Aktivkohle, Zeolithe und/oder ein organisches Polymer oder eine Kombination davon ist oder umfasst.

3. Verfahren nach einem der vorstehenden Ansprüche,
**wobei** das Adsorptionsagens einen Gewichtsanteil im Bereich von 20 bis 50 %, insbesondere im Bereich von 25 bis 35 %, der Filterschicht (14) ausmacht.

4. Verfahren nach einem der vorstehenden Ansprüche,
**wobei** das Adsorptionsagens eine mittlere Partikelgröße im Bereich von 25 bis 30 µm aufweist.

5. Verfahren nach einem der vorstehenden Ansprüche,
**wobei** das Adsorptionsagens eine maximale Partikelgröße von höchstens 200 µm, insbesondere höchstens 100 µm, aufweist.

6. Verfahren nach einem der vorstehenden Ansprüche,
**wobei** das Drainagemittel Cellulose, Rohcellulose, Holzmehl, Perlit und/oder Kieselgur oder eine Kombination davon ist oder umfasst.

7. Verfahren nach einem der vorstehenden Ansprüche,
**wobei** das Drainagemittel einen Gewichtsanteil im Bereich von 50 bis 80 % insbesondere im Bereich von 65 bis 75 %, der Filterschicht (14) ausmacht.

8. Verfahren nach einem der vorstehenden Ansprüche,
**wobei** das Drainagemittel eine mittlere Partikelgröße im Bereich von 60 bis 80 µm aufweist.

9. Verfahren nach einem der vorstehenden Ansprüche,
**wobei** das Drainagemittel eine maximale Partikelgröße von höchstens 400 µm, insbesondere höchstens 250 µm, aufweist.

10. Verfahren nach einem der vorstehenden Ansprüche,
**wobei** im Betrieb des Anschwemmfilters (10) ein Drainagemittel und/oder ein Adsorptionsagens einem Zustrom des Anschwemmfilters (10) beigegeben werden.

11. Verfahren nach einem der vorstehenden Ansprüche,
**wobei** sich die Trägerschicht (12) und die Filterschicht (14) vertikal erstrecken.

12. Verfahren nach einem der vorstehenden Ansprüche,
**wobei** die Trägerschicht (12) und die Filterschicht (14) zumindest abschnittsweise oder zumindest überwiegend, bevorzugt zumindest im Wesentlichen vollständig, eben angeordnet sind.

13. Verfahren nach einem der vorstehenden Ansprüche,
**wobei** die mittlere Partikelgröße des Drainagemittels größer als die mittlere Partikelgröße des Adsorptionsagens gewählt wird.

14. Verfahren nach einem der vorstehenden Ansprüche,
wobei gelöste Spurenstoffe aus dem Abwasser entfernt werden.

15. Verfahren nach einem der vorstehenden Ansprüche,
wobei das Verfahren als vierte Reinigungsstufe nachgeschaltet zu oder in einem Abwasserklarverfahren durchgeführt wird.
